# EUROPEAN PATENT APPLICATION

(11) **EP 4 654 348 A1**
(43) Date of publication of application: **26.11.2025**
(21) Application number: 25162571.1
(22) Date of filing: 10.03.2025
(51) Int. Cl.: H01M 50/202, H01M 50/247, H01M 50/256, H01M 50/264, C09J 7/00

(54) **BATTERY ATTACHMENT TAPE AND BATTERY ATTACHED WITH THE SAME**

(30) Priority: 22.05.2024 KR 20240066326
(71) Applicant: SAMSUNG SDI CO., LTD., Yongin-si, Gyeonggi-do 17084 (KR)
(72) Inventor: KO, Kyungsuk, Yongin-si, Gyeonggi-do 17084 (KR)
(74) Representative: Marks & Clerk LLP

(57) **Abstract**

A battery attachment tape comprises an adhesive portion positioned on a first surface of the battery attachment tape. The adhesive portion comprises an adhesive region having an adhesive strength for attachment to at least a portion of one surface of a battery cell and a non-adhesive region having no adhesive strength, and the non-adhesive region is formed at at least one corner of the adhesive portion.

## Description

### FIELD

Aspects of embodiments of the present disclosure relate to a battery attachment tape and a battery attached with the same. Specifically, aspects of embodiments of the present disclosure relate to a battery attachment tape with a noise-improving structure and a battery attached with the same.

### BACKGROUND

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

In particular, in circumstances where batteries are mounted on small, portable electronic devices, etc., battery attachment tapes may be attached and mounted thereon. The battery attachment tapes are required to prevent the batteries from moving within the electronic devices and may help prevent the batteries from being separated from the electronic devices even in circumstances where the electronic devices are dropped. In addition, in circumstances where the battery attachment tapes are attached to the batteries, it is desirable to minimize noise occurrence at the attachment sites.

The above information disclosed in this Background section is for enhancement of understanding of the background of the present disclosure, and therefore, it may contain information that does not constitute related (or prior) art.

### SUMMARY

Aspects of embodiments of the present disclosure provide battery attachment tapes that help prevent batteries from being separated in situations such as dropping electronic devices, while minimizing noise occurrence at the attachment sites of the battery attachment tapes, and batteries attached with the same.

These and other aspects and features of the present disclosure will be described in or will be apparent from the following description of embodiments of the present disclosure.

According to one or more embodiments of the present disclosure, a battery attachment tape comprises an adhesive portion positioned on a first surface of the battery attachment tape. The adhesive portion comprises an adhesive region having an adhesive strength for attachment to at least a portion of one surface of a battery cell and a non-adhesive region having no adhesive strength, and the non-adhesive region is formed at at least one corner of the adhesive portion.

In an embodiment, the adhesive portion may comprise a first corner and a second corner, the non-adhesive region may comprise a first non-adhesive region and a second non-adhesive region, the first non-adhesive region may be formed at the first corner, and the second non-adhesive region may be formed at the second corner.

In an embodiment, the first corner and the second corner may be positioned on one side of the adhesive portion.

In an embodiment, a second surface of the battery attachment tape may face the first surface of a fixing tape, and at least one of the first non-adhesive region and the second non-adhesive region may have a position corresponding to one end of a leg portion among a body portion and the leg portion of the fixing tape to be attached to the second surface of the battery attachment tape.

In an embodiment, the adhesive portion may comprise a first corner, a second corner, a third corner, and a fourth corner, and the non-adhesive region may comprise a first non-adhesive region formed at the first corner, a second non-adhesive region formed at the second corner, a third non-adhesive region formed at the third corner, and a fourth non-adhesive region formed at the fourth corner.

In an embodiment, the non-adhesive region may have a triangular shape.

In an embodiment, the adhesive portion may comprise a first adhesive region and a second adhesive region having less adhesive strength than that of the first adhesive region.

In an embodiment, the second adhesive region may be formed in a portion of a circumference of the non-adhesive region.

In an embodiment, the adhesive portion may comprise a first adhesive region and a second adhesive region, the non-adhesive region may have a right-angled triangular shape, a right-angled portion of the non-adhesive region may face a corner of the adhesive portion, the second adhesive region is formed in a region around a hypotenuse portion of the non-adhesive region, and an adhesive strength of the second adhesive region may be less than an adhesive strength of the first adhesive region.

In an embodiment, a portion of the battery attachment tape may further comprise a pulling portion extending in one direction of the battery attachment tape on one side of the battery attachment tape.

In an embodiment, the adhesive portion may comprise a first adhesive region and a third adhesive region, the third adhesive region may extend in a first direction, which is an extending direction of the pulling portion, and an adhesive strength of the third adhesive region may be greater than an adhesive strength of the first adhesive region.

In an embodiment, the third adhesive region may comprise a plurality of third adhesive regions arranged parallel to one another.

In an embodiment, the third adhesive region may be formed in a middle of the adhesive portion with respect to a second direction perpendicular to the first direction.

In an embodiment, the third adhesive region may be formed at one end or opposite ends of the adhesive portion with respect to a second direction perpendicular to the first direction.

In an embodiment, the third adhesive region may be formed at opposite ends of the adhesive portion with respect to a second direction perpendicular to the first direction, and a third adhesive region formed at a first end of the adhesive portion may be wider than a third adhesive region formed at a second end of the adhesive portion.

In an embodiment, a portion of the battery attachment tape may further comprise a wing portion extending in the second direction in a region in contact with the other end of the adhesive portion.

In an embodiment, the wing portion may be attached to at least a portion of a side surface of the battery cell.

In an embodiment, an area of the adhesive portion may be larger than an area of one surface of the battery cell.

In an embodiment, an area of the non-adhesive region may be 10% to 15% of an area of the adhesive portion.

A battery cell accommodated in an electronic device by using the battery attachment tape according to one or more embodiments of the present disclosure may be provided.

At least some of the above and other features of the invention are set out in the claims.

Because the adhesive portion of the battery attachment tape according to various embodiments of the present disclosure includes the third adhesive region with relatively high adhesive strength, it is possible to supplement the joining between the adhesive portion and the battery cell.

Because the battery attachment tape according to various embodiments of the present disclosure includes the non-adhesive region, noise occurring due to attachment between the battery cell and the adhesive portion may be reduced. The joint between the battery cell and the adhesive portion may be improved. Additionally, because the second adhesive region around the non-adhesive region may further reduce noise occurring due to attachment between the battery cell and the adhesive portion.

The battery attachment tape according to various embodiments of the present disclosure may complement the joining between the adhesive portion and the battery cell by including the third adhesive region with high adhesive strength in response to the weakening of the joining between the battery cell and the adhesive portion due to the non-adhesive region. That is, the adhesive portion and the battery cell may be firmly joined by the third adhesive region.

According to various embodiments of the present disclosure, in a circumstance where the battery fixing portion to which the battery cell is joined is twisted with respect to the A-axis, noise occurring between the battery cell and the battery attachment tape, between the battery attachment tape and the fixing tape, and/or between the fixing tape and the battery fixing portion may be cancelled or reduced.

However, aspects and features of the present disclosure are not limited to those described above, and other aspects and features not mentioned will be clearly understood by a person skilled in the art from the detailed description, described below.

### BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings:
FIG. 1 is a plan view illustrating a battery attachment tape according to embodiments of the present disclosure;
FIG. 2 is a plan view illustrating a battery cell to which a portion of the battery attachment tape according to embodiments of the present disclosure is attached;
FIG. 3 is a perspective view illustrating a battery cell to which a battery attachment tape is attached, according to embodiments of the present disclosure;
FIG. 4 is a plan view illustrating a fixing tape according to embodiments of the present disclosure;
FIG. 5 is a plan view illustrating a battery cell to which a battery attachment tape and a fixing tape are attached, according to embodiments of the present disclosure;
FIG. 6 is an exploded perspective view illustrating a battery cell, a battery attachment tape, a fixing tape, and a battery fixing portion according to embodiments of the present disclosure;
FIG. 7 illustrates a state in which the battery cell, the battery attachment tape, the fixing tape, and the battery fixing portion are joined, according to embodiments of the present disclosure;
FIG. 8 illustrates a state in which a battery cell, a battery attachment tape, a fixing tape, and a battery fixing portion are joined, according to embodiments of the present disclosure; and
FIG. 9 is a flowchart illustrating an example of a method of attaching a battery attachment tape according to embodiments of the present disclosure.

### DETAILED DESCRIPTION

Hereinafter, embodiments of the present disclosure will be described, in detail, with reference to the accompanying drawings. The terms or words used in the present specification and claims are not to be limitedly interpreted as general or dictionary meanings and should be interpreted as meanings and concepts that are consistent with the technical idea of the present disclosure on the basis of the principle that an inventor can be his/her own lexicographer to appropriately define concepts of terms to describe his/her invention in the best way.

The embodiments described in this specification and the configurations shown in the drawings are only some of the embodiments of the present disclosure and do not represent all of the technical aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements of 35 U.S.C. § 112(a) and 35 U.S.C. § 132(a).

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

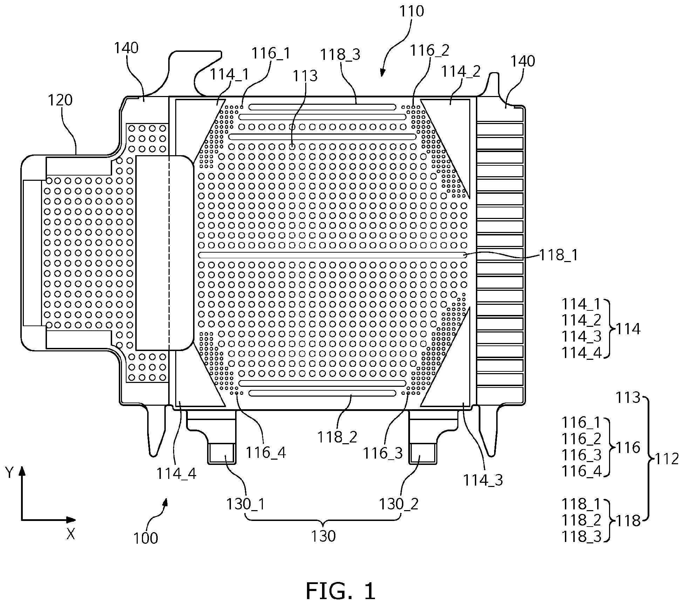

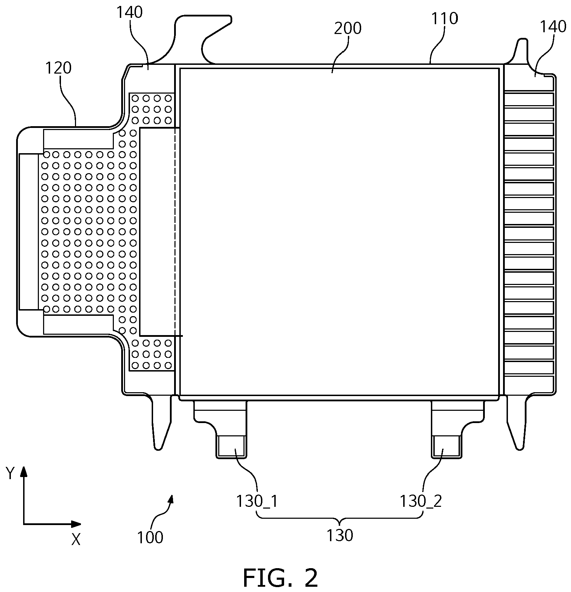

FIG. 1 illustrates a plan view of a battery attachment tape 100 according to embodiments of the present disclosure. FIG. 2 illustrates a plan view of a battery cell 200 to which a portion of the battery attachment tape 100 according to embodiments of the present disclosure is attached. The battery attachment tape 100 may include an adhesive portion 110 positioned on a first surface of the battery attachment tape 100. The adhesive portion 110 may include an adhesive region 112 that has an adhesive strength for attachment to at least a portion of one surface of the battery cell 200 and a non-adhesive region 114 that does not have an adhesive strength. The non-adhesive region 114 may be formed at at least one corner of the adhesive portion 110.

In some embodiments, the adhesive portion 110 may include a plurality of non-adhesive regions 114_1 to 114_4. In addition, the adhesive portion 110 may include a plurality of corners. For example, referring to FIG. 1, in a circumstance where the adhesive portion 110 has a rectangular shape, the adhesive portion 110 may include four corners. The non-adhesive areas 114_1 to 114_4 may be formed in at least some of the corners of the adhesive portion 110.

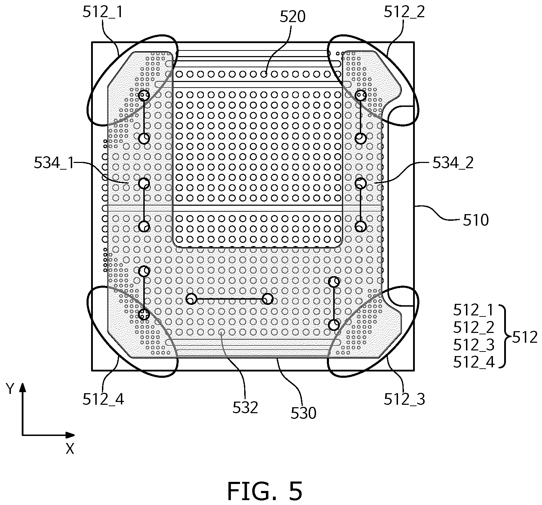

In some embodiments, the first non-adhesive region 114_1 may be formed at a first corner. In addition, the second non-adhesive region 114_2 may be formed at a second corner. The first corner and the second corner may be positioned on one side of the adhesive portion 110. One side of the adhesive portion 110 may be associated with one end of a fixing tape 400 to be attached to a second surface of the battery attachment tape 100. The second surface of the battery attachment tape 100 may be opposite the first surface of the battery attachment tape 100. A relationship between the fixing tape 400 and the adhesive portion 110 is described in detail with reference to FIG. 5.

In some embodiments, the adhesive portion 110 may include a first non-adhesive region 114_1, a second non-adhesive region 114_2, a third non-adhesive region 114_3, and a fourth non-adhesive region 114_4. In addition, the adhesive portion 110 may include a first corner, a second corner, a third corner, and a fourth corner. The first to fourth non-adhesive regions 114_1 to 114_4 may be respectively formed at the first to fourth corners. That is, in a case where the adhesive portion 110 has a rectangular shape having four corners, the non-adhesive regions may be respectively formed at the four corners.

In some embodiments, the non-adhesive region 114 may have a triangular shape. Referring to FIG. 1, in a circumstance where the non-adhesive region 114 has a right-angled triangular shape, the right-angled portion of the non-adhesive region 114 may be positioned toward the corner of the adhesive portion 110. However, the shape of the non-adhesive region 114 is not limited thereto, and the non-adhesive region 114 may have various shapes.

In some embodiments, the area of the non-adhesive region 114 may be 10% to 15% of the area of the adhesive portion 110. For example, the non-adhesive region 114 may occupy approximately 13% of the total area of the adhesive portion 110. However, the present disclosure is not limited thereto, and the non-adhesive region 114 may have various areas so long as the adhesive portion 110 may be attached to the battery cell 200.

In some embodiments, the adhesive region 112 may include a first adhesive region 113, a second adhesive region 116, and a third adhesive region 118. The second adhesive region 116 may be smaller than the first adhesive region 113. The third adhesive region 118 may be smaller than the first adhesive region 113.

In some embodiments, the second adhesive region 116 may be formed on a portion of the circumference of the non-adhesive region 114. As a non-limiting example, referring to FIG. 1, the second adhesive region 116 may include a 2_1 adhesive region 116_1, a 2_2 adhesive region 116_2, a 2_3 adhesive region 116_3, and a 2_4 adhesive region 116_4. The 2_1 adhesive region 116_1 may be formed around the first non-adhesive region 114_1. Similarly, the 2_2 adhesive region 116_2 may be formed around the second non-adhesive region 114_2. The 2_3 adhesive region 116_3 may be formed around the third non-adhesive region 114_3. The 2_4 adhesive region 116_4 may be formed around the fourth non-adhesive region 114_1.

In some embodiments, in a circumstance where the non-adhesive region 114 has a right-angled triangular shape and the right-angled portion of the non-adhesive region 114 faces the corner of the adhesive portion 110, the second adhesive region 116 may be formed in a hypotenuse portion of the non-adhesive region 114. Referring to FIG. 1, the right-angled portion of the first non-adhesive region 114_1 may face the corner of the adhesive portion 110, and the 2_1 adhesive region 116_1 may be formed in the hypotenuse portion of the first non-adhesive region 114_1. Similarly, the right-angled portion of the second non-adhesive region 114_2 may face the corner of the adhesive portion 110, and the 2_2 adhesive region 116_2 may be formed in the hypotenuse portion of the second non-adhesive region 114_2. The right-angled portion of the third non-adhesive region 114_3 may face the corner of the adhesive portion 110, and the 2_3 adhesive region 116_3 may be formed in the hypotenuse portion of the third non-adhesive region 114_3. The right-angled portion of the fourth non-adhesive region 114_4 may face the corner of the adhesive portion 110, and the 2_4 adhesive region 116_4 may be formed in the hypotenuse portion of the fourth non-adhesive region 114_4.

In some embodiments, the battery attachment tape 100 may include a pulling portion 120 on one side of the battery attachment tape 100, in which a portion of the battery attachment tape 100 extends in a direction of one side of the battery attachment tape 100. Referring to FIG. 1, the pulling portion 120 may be a portion of the battery attachment tape 100 extending in a first direction (e.g., an X-axis direction). At least a portion of the pulling portion 120 may have adhesive strength. At least a portion of the pulling portion 120 that has adhesive strength may be attached to at least a portion of the side surface of the battery of the battery cell 200.

In some embodiments, the pulling portion 120 may include a region where adhesive strength has been removed from a portion of the pulling portion 120. For example, the region from which the adhesive strength has been removed may be positioned at a corner of the pulling portion 120. The pulling portion 120 attached to the battery cell 200 may be separated from the battery cell 200 by using the region from which the adhesive strength has been removed.

In some embodiments, the adhesive portion 110 may include a third adhesive region 118 extending in the first direction, which is the extending direction of the pulling portion 120. The adhesive strength of the third adhesive region 118 may be greater than the adhesive strength of the first adhesive region 113. Referring to FIG. 1, the third adhesive region 118 may include a 3_1 adhesive region 118_1, a 3_2 adhesive region 118_2, and a 3_3 adhesive region 118_3.

In some embodiments, the third adhesive region 118 may include a plurality of third adhesive regions arranged parallel to each other. As the number of third adhesive regions arranged in parallel increases, the third adhesive region 118 may expand. As the third adhesive region 118 expands, the adhesive strength of the third adhesive region 118 may increase. Referring to FIG. 1, the adhesive strength of the 3_3 adhesive region 118_3 may be greater than the adhesive strength of the 3_2 adhesive region 118_2 or the 3_1 adhesive region 118_1. In other embodiments, as one third adhesive region 118 expands, the adhesive strength of the third adhesive region 118 may increase.

In some embodiments, the 3_1 adhesive region 118_1 may be formed in the middle of the adhesive portion 110 with respect to a second direction (e.g., a Y-axis direction) perpendicular to the first direction. **In** other embodiments, the 3_2 adhesive region 118_2 may be positioned at one end of the adhesive portion 110 with respect to the second direction. **In** other embodiments, the 3_3 adhesive region 118_3 may be positioned at the other end of the adhesive portion 110 with respect to the second direction. Referring to FIG. 1, the 3_1 adhesive region 118_1 to the 3_3 adhesive region 118_3 may exist together in one adhesive portion 110.

**In** some embodiments, the battery attachment tape 100 may include a wing portion 130 extending in the second direction on one side thereof. At this time, that one side of the battery attachment tape 100 may be different from a side of the battery attachment tape 100 where the pulling portion 120 is formed. At least a portion of the wing portion 130 may have an adhesive strength. At least a portion of the wing portion 130 that has an adhesive strength may be attached to at least a portion of the side surface of the battery of the battery cell 200.

For example, the wing portion 130 may include a first wing portion 130_1 and a second wing portion 130_2. Referring to FIG. 1, the first wing portion 130_1 and the second wing portion 130_2 may be formed on the one side of the battery attachment tape 100. However, the present disclosure is not limited thereto, and the first wing portion 130_1 and the second wing portion 130_2 may be positioned on different sides of the battery attachment tape 100.

In other embodiments, the 3_2 adhesive region 118_2 may be positioned at one end of the adhesive portion 110 with respect to the second direction. In addition, the 3_3 adhesive region 118_3 may be positioned at the other end of the adhesive portion 110 with respect to the second direction. In this case, the wing portion 130 in which a portion of the battery attachment tape 100 extends may be positioned in a region in contact with one end of the adhesive portion 110 where the 3_2 adhesive region 118_2 is positioned. In a case where one end of the battery attachment tape 100 where the 3_3 adhesive region 118_3 is positioned is an upper end and one end of the battery attachment tape 100 where the 3_2 adhesive region 118_2 is positioned is a lower end, the wing portion 130 may be positioned at the lower end of the battery attachment tape 100.

In some embodiments, the adhesive strength of the wing portion 130 may be greater than the adhesive strength of the first adhesive region 113. For example, the adhesive strength of the wing portion 130 may be equal to or similar to the adhesive strength of the third adhesive region 118. In a circumstance where the battery attachment tape 100 is attached to the battery cell 200, the joining between the lower end of the battery attachment tape 100 where the wing portion 130 is positioned and the battery cell 200 may be stronger than the joining between the upper end of the battery attachment tape 100 and the battery cell 200. To compensate for this, the number of 3_3 adhesive regions 118_3 may be greater than the number of 3_2 adhesive regions 118_2. Accordingly, the joining between the upper end of the battery attachment tape 100 and the battery cell 200 may be equal to or similar to the joining between the lower end of the battery attachment tape 100 and the battery cell 200.

In some embodiments, the battery attachment tape 100 may include a strong adhesive portion 140. The strong adhesive portion 140 may be formed on one side of the battery attachment tape 100. The strong adhesive portion 140 may be attached to at least a portion of the side surface of the battery cell 200. The adhesive strength of the strong adhesive portion 140 may be equal to or greater than the adhesive strength of the third adhesive region 118. The strong adhesive portion 140 may help the battery attachment tape 100 be relatively strongly joined to surfaces other than the first surface of the battery cell 200. Herein, the first surface of the battery cell 200 may refer to one surface that is joined to the first surface of the battery attachment tape 100.

As described above, the non-adhesive region 114 does not have an adhesive strength, and the adhesive strength of the second adhesive region 116 is weaker than the adhesive strength of the first adhesive region 113. Accordingly, the joining between the adhesive portion 110 and the battery cell 200 may be relatively weak. In this circumstance, because the adhesive portion 110 includes a third adhesive region 118 with a relatively high adhesive strength (i.e. comparatively versus the first adhesive region 113), it is possible to complement the joining between the adhesive portion 110 and the battery cell 200.

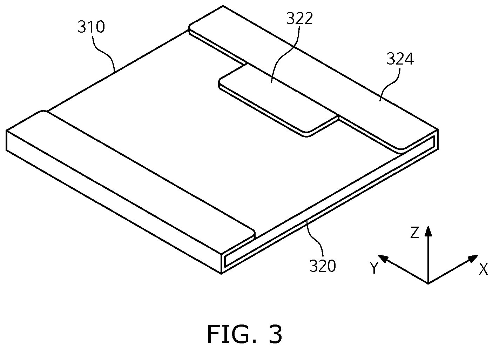

Referring to FIG. 2, in a circumstance where the battery attachment tape 100 is being attached to the battery cell 200, the lower surface of the battery cell 200 may be positioned on the first surface of the battery attachment tape 100. In such a circumstance, the area of the adhesive portion 110 may be larger than the area of the first surface of the battery cell 200. Thereafter, the pulling portion 120, the wing portion 130, and the strong adhesive portion 140 may be attached to at least a portion of the side surface of the battery cell 200. Additionally, each of the pulling portion 120, the wing portion 130, and the strong adhesive portion 140 may also be attached to the second surface of the battery cell 200. Herein, the second surface of the battery cell 200 may be opposite the second surface of the battery cell 200. The structure in which the battery attachment tape 100 is joined to the battery cell 200 is described in detail with reference to FIG. 3.

The non-adhesive region 114 may reduce noise occurring due to the attachment between the battery cell 200 and the adhesive portion 110, and the joint between the battery cell 200 and the adhesive portion 110 may be improved. Additionally, by including the second adhesive region 116 around the non-adhesive region 114, noise occurring due to the attachment between the battery cell 200 and the adhesive portion 110 may be further reduced. In addition, in response to the weakening of the joining between the battery cell 200 and the adhesive portion 110 due to the non-adhesive region 114, the third adhesive region 118 may complement the joining between the adhesive portion 110 and the battery cell 200. That is, the adhesive portion 110 and the battery cell 200 may be firmly joined by the third adhesive region.

FIG. 3 illustrates a perspective view illustrating a battery cell 310 to which a battery attachment tape 320 is attached, according to embodiments of the present disclosure. As described above with reference to FIGS. 1 and 2, a first surface of the battery cell 310 may be attached so as to face a first surface of the battery attachment tape 320 on which an adhesive portion is formed. Thereafter, a pulling portion 322, a wing portion (not shown), and a strong adhesive portion 324 may be attached to at least a portion of the side surface of the battery cell 310. Additionally, each of the pulling portion 322, the wing portion, and the strong adhesive portion 324 may also be attached to the second surface of the battery cell 310. Herein, the second surface of the battery cell 310 may face the first surface of the battery cell 310. In FIG. 3, some components of the battery attachment tape 320 are not illustrated, and the present disclosure is not limited thereto.

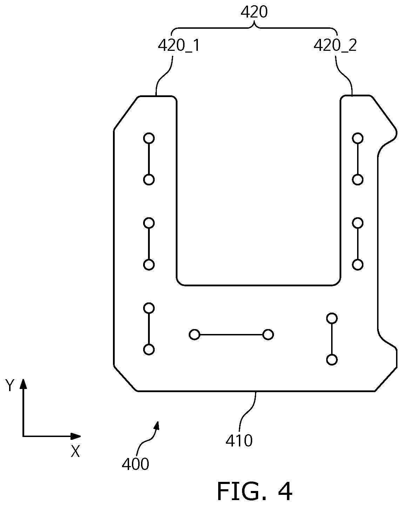

The battery cell 310 may be joined to a battery fixing portion in a state in which the battery attachment tape 320 is attached thereto. The first surface of the battery cell 310, to which the adhesive portion is attached, may be joined so as to face the battery fixing portion. In this circumstance, in order to fix the battery fixing portion, a fixing tape may be attached to the second surface of the battery attachment tape 320 and the fixing tape may be joined to the battery fixing portion. In such a circumstance, the second surface of the battery attachment tape 320 may face the battery fixing portion. The second surface of the battery attachment tape 320 may be opposite the first surface of the battery attachment tape 320. The joining relationship between the fixing tape, the battery attachment tape 320, and the battery fixing portion is described in detail with reference to FIGS. 4 to 8.

FIG. 4 illustrates a plan view illustrating a fixing tape 400 according to embodiments of the present disclosure. The fixing tape 400 may be attached to the second surface of the battery attachment tape (e.g., the battery attachment tape 100 of FIG. 1). Herein, the second surface of the battery attachment tape may face the first surface of the battery attachment tape on which the adhesive portion is formed.

The fixing tape 400 may include a body portion 410 and a leg portion 420. The body portion 410 and the leg portion 420 may be connected to one another, and the leg portion 420 may extend in the form of being branched from the body portion 410. The leg portion 420 may include a first leg portion 420_1 and a second leg portion 420_2.

The first leg portion 420_1 and the second leg portion 420_2 may be positioned on one side of the body portion 410. The first leg portion 420_1 and the second leg portion 420_2 might not be connected to one another. In some embodiments, the widths of the first leg portion 420_1 and the second leg portion 420_2 may be different from each other.

The fixing tape 400 may have an adhesive strength on both its first and second surfaces. Herein, the first surface and the second surface of the fixing tape 400 may oppose one another. The first surface of the fixing tape 400 may be attached to the second surface of the battery attachment tape, and the second surface of the fixing tape 400 may be attached to the battery fixing portion. Due to this, the battery cell (e.g., the battery cell 200 of FIG. 2) may be fixed to the battery fixing portion.

FIG. 5 illustrates a plan view of a battery cell 510 to which a battery attachment tape 520 and a fixing tape 530 are attached, according to embodiments of the present disclosure. The first surface of the battery attachment tape 520 may be attached to the first surface of the battery cell 510. Specifically, an adhesive portion of the battery attachment tape 520 may be attached to the first surface of the battery cell 510. Thereafter, the first surface of the fixing tape 530 may be attached to the second surface of the battery attachment tape 520. FIG. 5 is a view of the second surface of the battery cell 510 to which the battery attachment tape 520 and the fixing tape 530 may be attached. FIG. 5 illustrates the adhesive portion for convenience of explanation. However, in a circumstance where the battery cell 510 to which the battery attachment tape 520 and the fixing tape 530 are attached is actually viewed from the second surface, the adhesive portion may not appear.

In some embodiments, the battery cell may include a first corner region 512_1, a second corner region 512_2, a third corner region 512_3, and a fourth corner region 512_4 on the second surface thereof. Each of the corner regions 512_1 to 512_4 may correspond to a portion of the adhesive portion of the battery attachment tape 520. The first corner region 512_1 may correspond to a first non-adhesive region (e.g., the first non-adhesive region 114_1 of FIG. 1) and a 2_1 adhesive region (e.g., the 2_1 adhesive region 116_1 of FIG. 1). Similarly, the second corner region 512_2 may correspond to a second non-adhesive region (e.g., the second non-adhesive region 114_2 of FIG. 1) and a 2_2 adhesive region (e.g., the 2_2 adhesive region 116_2 of FIG. 1). A third corner region 512_3 may correspond to a third non-adhesive region (e.g., the third non-adhesive region 114_3 of FIG. 1) and a 2_3 adhesive region (e.g., the 2_3 adhesive region 116_3 of FIG. 1). A fourth corner region 512_4 may correspond to a fourth non-adhesive region (e.g., the fourth non-adhesive region 114_4 of FIG. 1) and a 2_4 adhesive region (e.g., the 2_4 adhesive region 116_4 of FIG. 1).

In some embodiments, each of the corner regions 512_1 to 512_4 may correspond to the fixing tape 530. The first corner region 512_1 may correspond to one end of a first leg portion 534_1. The second corner region 512_2 may correspond to one end of a second leg portion 534_2. The third corner region 512_3 and the fourth corner region 512_4 may respectively correspond to corners of the body portion 532.

Noise may occur as a portion of the battery attachment tape 520 is attached and detached from the battery cell 510, or the fixing tape 530 while the battery cell 510, the battery attachment tape 520, and the retention tape 530 are attached to each other, respectively. For example, noise may occur between a portion of the adhesive portion of the battery attachment tape 520 corresponding to the first corner region 512_1 and one end of the first leg portion 534_1 of the fixing tape 530. Similarly, noise may occur between a portion of the adhesive portion of the battery attachment tape 520 corresponding to the second corner region 512_2 and one end of the second leg portion 534_2 of the fixing tape 530. For example, noise may occur between a portion of the adhesive portion of the battery attachment tape 520 corresponding to the third corner region 512_3 and the edge of the body portion 532 of the fixing tape 530. Similarly, noise may occur between a portion of the adhesive portion of the battery attachment tape 520 corresponding to the fourth corner region 512_4 and the edge of the body portion 532 of the fixing tape 530.

In some embodiments, less noise may occur in the first corner region 512_1 due to the first non-adhesive region and/or the 2_1 adhesive region corresponding to the first corner region 512_1. Similarly, less noise may occur in the second corner region 512_2 due to the second non-adhesive region and/or the 2_2 adhesive region corresponding to the second corner region 512_2. In some embodiments, less noise may occur in the third corner region 512_3 due to the third non-adhesive region and/or the 2_3 adhesive region corresponding to the third corner region 512_3. Similarly, less noise may occur in the fourth corner region 512_4 due to the fourth non-adhesive region and/or the 2_4 adhesive region corresponding to the fourth corner region 512_4. In other words, the occurrence of noise between the battery attachment tape 520 and the fixing tape 530 may be minimized due to the non-adhesive region having no adhesive strength and the second adhesive region having relatively weak adhesive strength.

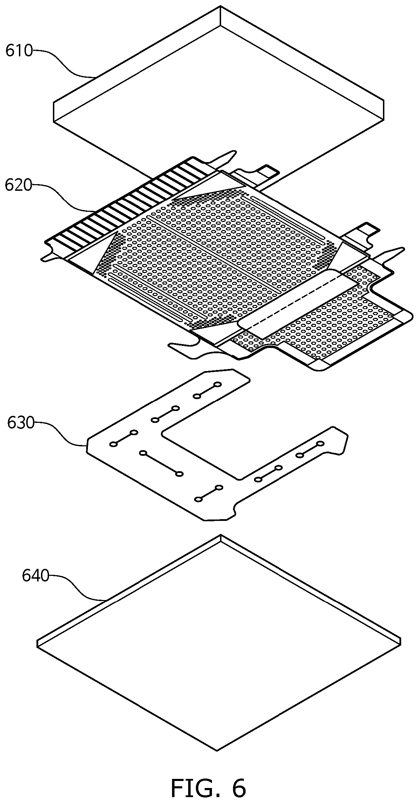

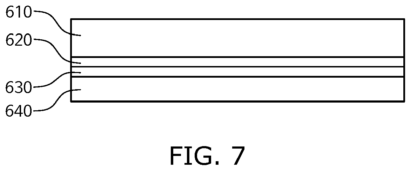

FIG. 6 illustrates an exploded perspective view of a battery cell 610, a battery attachment tape 620, a fixing tape 630, and a battery fixing portion 640 according to embodiments of the present disclosure. FIG. 7 illustrates a state in which the battery cell 610, the battery attachment tape 620, the fixing tape 630, and the battery fixing portion 640 are joined, according to embodiments of the present disclosure.

In some embodiments, the battery cell 610, the battery attachment tape 620, the fixing tape 630, and the battery fixing portion 640 may be joined to one another in this stated order. Specifically, a first surface of the battery cell 610 and a first surface of the battery attachment tape 620 may be joined to one another. In this circumstance, an adhesive portion may be formed on the first surface of the battery attachment tape 620. A first surface of the fixing tape 630 may be joined to a second surface of the battery attachment tape 620. The first and second surfaces of the fixing tape 630 may have adhesive strength. The second surface of the fixing tape 630 may be joined to the battery fixing portion 640. That is, the battery cell 610 may be joined to the battery fixing portion 640 so that the first surface of the battery cell 610 faces the battery fixing portion 640.

In some embodiments, the battery fixing portion 640 may be included in an electronic device. For example, the electronic device may include the battery fixing portion 640 so as to accommodate the battery cell 610. In the electronic device, the battery fixing portion 640 may be associated with a space for fixing the battery cell 610 by using the fixing tape 630.

Referring to FIG. 7, in a circumstance where the first surface of the battery cell 610 is referred to as a lower surface, the battery attachment tape 620 may be joined to the bottom of the battery cell 610. The fixing tape 630 may be joined to the bottom of the battery attachment tape 620. The battery fixing portion 640 may be joined to the bottom of the fixing tape 630. In FIG. 7, the battery cell 610, the battery attachment tape 620, the fixing tape 630, and the battery fixing portion 640 are illustrated to have the same width, but are not limited thereto and may have different widths.

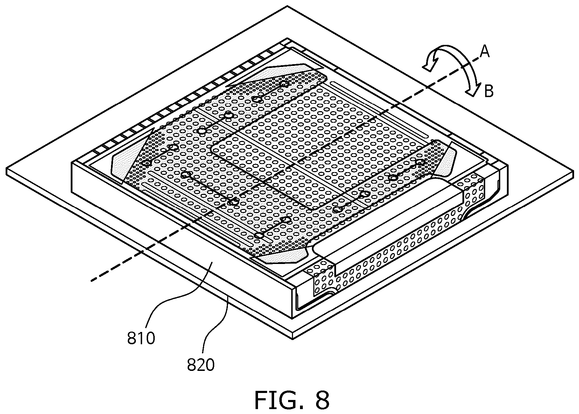

FIG. 8 illustrates a state in which a battery cell 810, a battery attachment tape, a fixing tape, and a battery fixing portion 820 are joined, according to embodiments of the present disclosure. A first surface of the battery attachment tape may be attached to a first surface of the battery cell 810, a first surface of the fixing tape may be attached to a second surface of the battery attachment tape, and the battery fixing portion 820 may be attached to a second surface of the fixing tape. In FIG. 8, the second surface of the battery cell 610 described with reference to FIGS. 6 and 7 may be illustrated as facing downward. In addition, in FIG. 8, the battery attachment tape and the fixing tape may not be illustrated, as viewed from above the second surface of the battery fixing portion 820.

Referring to FIG. 8, the battery fixing portion 820 may have an A-axis. For example, the A-axis may be parallel to the first direction of the battery attachment tape 100 of FIG. 1. However, the present disclosure is not limited thereto, and the A-axis may be parallel to the second direction of the battery attachment tape 100 of FIG. 1. In addition, the A-axis may pass through the center of the battery attachment tape 100.

The battery fixing portion 820 may be twisted counterclockwise and clockwise with respect to the A-axis. Referring to FIG. 8, the battery fixing portion 820 may be twisted in a direction B with respect to the A-axis. As the battery fixing portion 820 is twisted, noise may occur between the battery cell 810, the battery attachment tape, the battery fixing portion, and the battery fixing portion 820. For example, noise may mainly occur in a first corner region (e.g., the first corner region 512_1 of FIG. 5) and a second corner region (e.g., the second corner region 512_2 of FIG. 5). For example, noise may mainly occur in a third corner region (e.g., the third corner region 512_3 of FIG. 5) and a fourth corner region (e.g., the fourth corner region 512_4 of FIG. 5).

In some embodiments, the adhesive strength of a portion of the adhesive portion of the battery attachment tape corresponding to the first to fourth corner regions may be removed, or the adhesive strength thereof may be relatively weaker than the adhesive strength of other portions. For example, the first non-adhesive region of the adhesive portion corresponding to the first corner region may have no adhesive strength. The adhesive strength of the 2_1 non-adhesive region of the adhesive portion corresponding to the first corner region may be relatively weaker than the adhesive strength of the first adhesive region. Due to this, in a circumstance where the battery fixing portion 820 to which the battery cell 810 is joined is twisted with respect to the A-axis, noise occurring between the battery cell 810 and the battery attachment tape, between the battery attachment tape and the fixing tape, and/or between the fixing tape and the battery fixing portion may be cancelled or reduced.

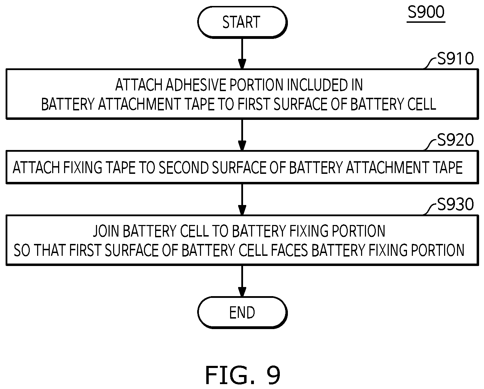

FIG. 9 illustrates a flowchart illustrating an example of a method S900 of attaching a battery attachment tape according to embodiments of the present disclosure. In some embodiments, the method S900 of attaching the battery attachment tape may be started by attaching the adhesive portion included in the battery attachment tape (e.g., the battery attachment tape 100 of FIG. 1) to the first surface of the battery cell (S910). The battery attachment tape may include the adhesive portion formed on the first surface of the battery attachment tape. The adhesive portion may include the adhesive region with adhesive strength to be attached to at least a portion of one surface of the battery cell and a non-adhesive region without adhesive strength, and the non-adhesive region may be formed at at least one corner of the adhesive portion. In addition, the area of the adhesive portion may be larger than the area of one surface of the battery cell. In addition, the area of the non-adhesive region may be 10% to 15% of the area of the adhesive portion.

In some embodiments, the adhesive portion may include the first edge and the second edge, and the non-adhesive region may include the first non-adhesive region and the second non-adhesive region. In addition, the first non-adhesive region may be formed at the first corner, and the second non-adhesive region may be formed at the second corner. The first edge and the second edge may be positioned on one side of the adhesive portion.

In some embodiments, the second surface of the battery attachment tape may be opposite the first surface of the battery attachment tape. At least one of the first non-adhesive region and the second non-adhesive region may have a position corresponding to one end of the leg portion among the body portion and the leg portion of the fixing tape to be attached to the second surface of the battery attachment tape.

In some embodiments, the adhesive portion may include the first corner, the second corner, the third corner, and the fourth corner. The non-adhesive region may include the first non-adhesive region formed at the first corner, the second non-adhesive region formed at the second corner, the third non-adhesive region formed at the third corner, and the fourth non-adhesive region formed at the fourth corner. For example, the non-adhesive region may have a triangular shape.

In some embodiments, the adhesive portion may include the first adhesive region and the second adhesive region having a smaller adhesive strength than the first adhesive region. For example, the second adhesive region may be formed in a portion of the circumference of the non-adhesive region.

In some embodiments, the adhesive portion may include the first adhesive region and the second adhesive region, the non-adhesive region may have a right-angled triangular shape, and the right-angled portion of the non-adhesive region may face the corner of the adhesive portion. Herein, the second adhesive region may be formed in a region around the hypotenuse portion of the non-adhesive region, and the adhesive strength of the second adhesive region may be less than the adhesive strength of the first adhesive region.

In some embodiments, the battery attachment tape may further include the pulling portion on one side of the battery attachment tape, where a portion of the battery attachment tape extends in one direction of the battery attachment tape.

In some embodiments, the adhesive portion may include the first adhesive region and the third adhesive region, the third adhesive region may extend in a first direction in which the pulling portion extends, and the third adhesive region may include a plurality of adhesive regions arranged parallel to one another. The adhesive strength of the third adhesive region may be greater than the adhesive strength of the first adhesive region. For example, the third adhesive region may be formed in the middle of the adhesive portion with respect to the second direction perpendicular to the first direction. For example, the third adhesive region may be formed at one end or opposite ends of the adhesive portion with respect to the second direction perpendicular to the first direction. For example, the third adhesive region may be formed at opposite ends of the adhesive portion with respect to the second direction perpendicular to the first direction, and the third adhesive region formed at one end of the adhesive portion may be wider than the third adhesive region formed at the other end of the adhesive portion.

In some embodiments, a portion of the battery attachment tape may further include the wing portion extending in the second direction in a region adjacent to the other end of the adhesive portion. Herein, the wing portion may be attached to at least a portion of the side surface of the battery cell.

In some embodiments, the second surface of the battery attachment tape may be opposite the first surface of the battery attachment tape, and the non-adhesive region may be associated with noise occurring between the battery attachment tape and the fixing tape to be attached to the second surface of the battery attachment tape.

In some embodiments, the fixing tape may be attached to the second surface of the battery attachment tape (S920).

In some embodiments, the battery cell may be joined to the battery fixing portion so that the first surface of the battery cell faces the battery fixing portion (S930).

The flowchart of FIG. 9 and the above description are only examples of the present disclosure, and the scope of the present disclosure is not limited to the flowchart of FIG. 9 and the above description. For example, one or more steps in the flowchart and the above description may be added/changed/deleted, the order of one or more steps may be changed, and/or one or more steps may be performed simultaneously.

Although the present disclosure has been described with reference to embodiments and drawings illustrating aspects thereof, the present disclosure is not limited thereto. Various modifications and variations can be made by a person skilled in the art to which the present disclosure belongs within the scope of the present disclosure and the claims and their equivalents, below.

## Claims

1. A battery attachment tape (100) comprising:
an adhesive portion (110) positioned on a first surface of the battery attachment tape (100),
wherein the adhesive portion (110) comprises an adhesive region (112) having an adhesive strength for attachment to at least a portion of one surface of a battery cell (200) and a non-adhesive region (114) having no adhesive strength, and
the non-adhesive region (114) is formed at at least one corner of the adhesive portion.

2. The battery attachment tape (100) as claimed in claim 1, wherein the adhesive portion (110) comprises a first corner and a second corner,
the non-adhesive region (114) comprises a first non-adhesive region (114_1) and a second non-adhesive region (114_2),
the first non-adhesive region (114_1) is formed at the first corner, and
the second non-adhesive region (114_2) is formed at the second corner.

3. The battery attachment tape (100) as claimed in claim 2, wherein the first corner and the second corner are positioned on one side of the adhesive portion (110).

4. The battery attachment tape (100) as claimed in claim 2 or claim 3, wherein a second surface of the battery attachment tape (100) is opposite the first surface of the battery attachment tape (100), and
at least one of the first non-adhesive region (114_1) or the second non-adhesive region (114_1) has a position corresponding to one end of a leg portion (534_1, 534_2) among a body portion (532) and the leg portion (534_1, 534_2) of the fixing tape (530) to be attached to the second surface of the battery attachment tape (520).

5. The battery attachment tape (100) as claimed in any one of claims 1 to 4, wherein the adhesive portion comprises a first corner, a second corner, a third corner, and a fourth corner, and
the non-adhesive region (114) comprises a first non-adhesive region (114_1) formed at the first corner, a second non-adhesive region (114_2) formed at the second corner, a third non-adhesive region (114_3) formed at the third corner, and a fourth non-adhesive region (114_4) formed at the fourth corner.

6. The battery attachment tape (100) as claimed in any one of claims 1 to 5, wherein the non-adhesive region (114) has a triangular shape.

7. The battery attachment tape (100) as claimed in any one of claims 1 to 6, wherein the adhesive portion (112) comprises a first adhesive region (113) and a second adhesive region (116) that has less adhesive strength than that of the first adhesive region (113).

8. The battery attachment tape (100) as claimed in claim 7, wherein the second adhesive region (116) is formed in a portion of a circumference of the non-adhesive region (114).

9. The battery attachment tape (100) as claimed in any one of claims 1 to 6, wherein the adhesive portion (110) comprises a first adhesive region (113) and a second adhesive region (116),
the non-adhesive region (114) has a right-angled triangular shape,
a right-angled portion of the non-adhesive region (114) faces a corner of the adhesive portion (110),
the second adhesive region (116) is formed in a region around a hypotenuse portion of the non-adhesive region (114), and
an adhesive strength of the second adhesive region (116) is less than an adhesive strength of the first adhesive region (113).

10. The battery attachment tape (100) as claimed in any one of claims 1 to 8, wherein a portion of the battery attachment tape (100) further comprises a pulling portion (120) extending in one direction of the battery attachment tape (100) on one side of the battery attachment tape (100).

11. The battery attachment tape (100) as claimed in claim 10, wherein the adhesive portion (110) comprises a first adhesive region (113) and a third adhesive region (118),
the third adhesive region (118) extends in a first direction, which is an extending direction of the pulling portion (120), and
an adhesive strength of the third adhesive region (118) is greater than an adhesive strength of the first adhesive region (113).

12. The battery attachment tape (100) as claimed in claim 11, wherein the third adhesive region (118) comprises a plurality of third adhesive regions (118_1, 118_2, 118_3) arranged parallel to one another.

13. The battery attachment tape (100) as claimed in claim 11 or claim 12, wherein the third adhesive region (118_1) is formed in a middle of the adhesive portion with respect to a second direction perpendicular to the first direction.

14. The battery attachment tape as claimed in any one of claims 11 to 13, wherein the third adhesive region (118_1, 118_3) is formed at one end or opposite ends of the adhesive portion with respect to a second direction perpendicular to the first direction.

15. A battery cell (610) accommodated in an electronic device by using the battery attachment tape (620) as claimed in claim 1 to 14.
